# EUROPEAN PATENT SPECIFICATION

(11) **EP 2 628 773 B1**
(45) Date of publication and mention of the grant of the patent: **30.03.2016**
(21) Application number: 11832786.5
(22) Date of filing: 14.10.2011
(51) Int. Cl.: C08L 101/00, C08L 101/06, B29B 7/00, C08J 5/00, B29B 9/10

(54) **RESIN BLEND FOR MELTING PROCESS**
HARZMISCHUNG FÜR SCHMELZPROZESSE
MÉLANGE DE RÉSINES POUR PROCESSUS DE FUSION

(30) Priority: 14.10.2011 KR 20110105370; 14.10.2011 KR 20110105368; 14.10.2010 KR 20100100468
(43) Date of publication of application: 21.08.2013
(73) Proprietor: LG Chem, Ltd., Youngdungpo-gu Seoul 150-721 (KR)
(72) Inventor: YOO, Houng Sik, Seoul 143-831 (KR); RYU, Jin Young, Daejeon 302-120 (KR); KIM, Hak Shin, Daejeon 305-738 (KR); CHOI, Eun Joo, Daejeon 305-509 (KR); HONG, Young Jun, Daejeon 302-120 (KR)
(74) Representative: Goddar, Heinz J.
(86) International application number: PCT/KR2011/007679
(87) International publication number: WO 2012/050399

(56) References cited:
- EP-A1- 2 292 694
- FR-A1- 2 374 361
- JP-A- 2000 239 532
- JP-A- 2003 213 108
- JP-A- 2004 204 122
- JP-A- 2006 306 916
- JP-A- 2010 222 553
- KR-B1- 0 130 822
- J. BRANDRUP ET AL.: "POLYMER HANDBOOK", 1999, WILEY-INTERSCIENCE, NEW YORK, US, XP002719770, pages VI/199,VI/203-VI/204, * page VI/199 * * page VI/203 - page VI/204 *

## Description

### CROSS-REFERENCE TO RELATED APPLICATION

This application claims priority to and the benefit of Korean Patent Application No. 2010-0100468, filed October 14, 2010, Korean Patent Application No. 2011-0105370, filed October 14, 2011, and Korean Patent Application No. 2011-0105368, filed October 14, 2011.

### TECHNICAL FIELD

The present invention relates to a resin blend for a melting process, a pellet, a method of preparing a resin article using the same and a resin article, and more particularly, to a resin blend for a melting process which can improve mechanical and surface characteristics of a resin article and increase manufacturing efficiency, for example, reduction of a processing time, an increase in productivity and reduction of a manufacturing cost without using additional surface coating, a pellet, a method of preparing a resin article using the same and a resin article.

### BACKGROUND

Resins are used for various applications such as a part of an automobile, a helmet, a part of an electric device, a part of a spinning machine, a toy or a pipe due to their excellent processability and properties such as tensile strength, modulus of elasticity, heat resistance and impact resistance.

Particularly, resins for home interior accessories, parts of automobiles and toys are required to be environment-friendly and have excellent scratch resistance because they are in direct contact with the human body. However, resins are generally decomposed by oxygen in the air, ozone and light and easily changed in color when exposed to an external environment over a certain period of time. Thus, the resins become very weak in weather resistance and strength, and are easily breakable. For this reason, it is common to use a method of compensating for shortcomings of resins and improving a surface characteristic by applying an additional coating or plating process. However, such a coating or plating process can degrade efficiency and economic feasibility of a manufacturing process of resins or generate toxic materials during the process or disposal of a resin product.

Accordingly, various methods have been suggested to improve characteristics such as scratch resistance, heat resistance and whether resistance of a plastic resin without using the coating or plating process. For example, a method of adding an inorganic particle to resins has been suggested to improve physical properties such as wear resistance and hardness of resins. However, the method may deteriorate the processability of a resin and impact strength and brilliance characteristics. While a method of further adding a resin having excellent scratch resistance or heat resistance to improve a surface characteristic of a plastic resin has also been suggested, according to this method, an additional process such as a curing process after injection of a product is needed, and the physical properties such as surface hardness may not be improved to the extent required for the product.

For these reasons, there is a demand for a method of increasing efficiency and economic feasibility of a process and improving mechanical and surface characteristic of an article without using a process of coating or plating a plastic resin. FR-A-2374361 discloses a similar resin blend, but is not concerned with layer separation.

### SUMMARY OF THE INVENTION

The present invention provides a resin blend for a melting process. The resin blend can improve mechanical and surface characteristics of a resin article. Further, since coating or plating is not required for manufacturing a resin article, a manufacturing time and/or manufacturing cost can be reduced, and productivity can be increased.

The present invention further provides a pellet by using the resin blend for a melting process.

The present invention still further provides a method of preparing a resin article by using the resin blend for a melting process.

In one embodiment, a resin blend for a melting process includes a first resin; and a second resin that comprises a resin to which an organic functional group containing one oxygen atom or more is introduced, and that has a difference in melt viscosity from the first resin of 0.1 to 1000 pa*s at a shear rate of 100 to 1000 s⁻¹ and a processing temperature of the resin blend.

In another embodiment, a pellet includes a core including a first resin; and a shell including a second resin that comprises a resin to which an organic functional group containing one oxygen atom or more is introduced, and that has a difference in melt viscosity from the first resin of 0.1 to 1000 pa*s at a shear rate of 100 to 1000 s⁻¹ and a processing temperature of the pellet.

In another embodiment, a melting-processed resin article includes a first resin layer; a second resin layer formed on the first resin layer; and an interface layer including a first resin and a second resin and formed between the first and second resin layers. Here, the second resin layer includes a resin to which an organic functional group containing one oxygen atom or more is introduced.

In another embodiment, a melting-processed resin article includes a first resin layer; and a second resin layer formed on the first resin layer. From a surface of the second resin layer, a component of the first resin layer is detected by an infrared (IR) spectrometer, and the second resin layer includes a resin to which an organic functional group containing one oxygen atom or more is introduced.

In another embodiment, a method of preparing a resin article includes melting the resin blend to form a melt blend and processing the melt blend.

### BRIEF DESCRIPTION OF THE DRAWINGS

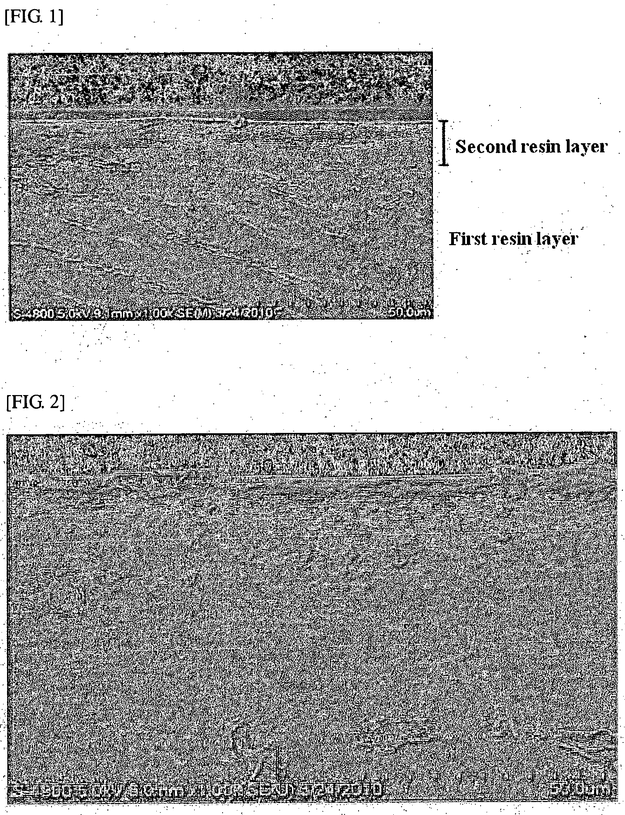

FIG. 1 is a SEM image illustrating a cross-sectional view of a layer-separated article prepared according to Example 2.
FIG. 2 is a SEM image illustrating a cross-sectional view of an article prepared according to Comparative Example 1.

### DETAILED DESCRIPTION OF EXEMPLARY EMBODIMENTS

Hereinafter, a resin blend for a melting process, a pellet, a method of preparing a resin article using the same and a resin article according to embodiments of the present invention will be described in detail.

In the present invention, a blend may be one in which a first resin and a second resin are uniformly blended in one matrix, or one in which a pellet composed of a first resin and a pellet composed of a second resin are uniformly blended. The one in which the resins are uniformly blended in one matrix indicates that first and second resins are uniformly blended in one pellet, and thus are present in a type of a composition.

A melting process or melt processing may indicate a process of melting a resin blend at a melting temperature (Tm) of the resin blend or higher to form a melt blend and forming a desired product by using the melt blend. For example, the melting process may include injection, extrusion, fiber spinning, foaming.

A layer separation or layer-separated may indicate that one layer substantially formed of one resin is disposed or aligned on another layer substantially formed of another resin. The layer substantially formed of one resin may indicate that one type of resin is continuously present in the entire layer, without forming a sea-island structure in the layer. The sea-island structure may indicate a phase-separated resin is partially distributed in an entire resin blend. Further, the "substantially formed" may indicate that one resin is present or one resin is rich in a layer. In the layer separation, two layers may be separated, or when necessary, three or more layers may be separated.

The inventors found that layer separation may be observed in a resin blend for a melting process including a certain first and second resins due to difference in physical properties such as hydrophobicity, surface energy, a glass transition temperature or a melt viscosity, and a surface of a pellet or resin article is selectively coated using the layer separation without using an additional process during or after an extrusion or injection process, and thus completed the present invention.

Particularly, since the second resin to which a predetermined organic functional group such as an organic functional group having one oxygen atom or more is introduced has a lower melt viscosity, compared to the first resin, the layer separation may be easily performed in a melting process such as extrusion or injection, and the second resin may constitute a surface layer of a pellet or a resin article. Further, since the surface layer may have a high glass transition temperature, the surface hardness of the pellet or the resin article can be additionally improved. Accordingly, when the resin blend for a melting process is used, the resin article having excellent mechanical and surface characteristics may be obtained without using an additional coating process.

In one embodiment, a resin blend for a melting process includes a first resin and a second resin. The second resin comprises a resin to which an organic functional group containing one oxygen atom or more is introduced. Also, the second resin has a difference in melt viscosity from the first resin of 0.1 to 1000 pa*s at a shear rate of 100 to 1000 s⁻¹ and a processing temperature of the resin blend.

The difference in a melt viscosity between the first resin and the second resin is 1 to 1000 pa*s at a shear rate of 100 to 1000 s⁻¹ and a processing temperature of the resin blend. The difference in a melt viscosity may be caused by a crosslikable and bulky functional group included in side chains of the second resin. When the difference in the melt viscosity is very small, the layer separation of the resin blend does not easily occur because the first resin is easily mixed with the second resin. When the difference in the melt viscosity is very large, the first and second resins may not be attached to each other, and thus may be detached.

The melt viscosity may be measured using a capillary flow meter, and indicates a shear viscosity (pa*s) at a predetermined processing temperature and shear rate (/s).

The shear rate is a shear rate applied when the resin blend is processed, and may be controlled according to a processing method.

The processing temperature is a temperature at which the resin blend is processed. For example, when the resin blend is subject to a process such as extrusion or injection, the processing temperature is a temperature at which the extrusion or injection is performed. The processing temperature may be controlled according to a resin subjected to extrusion or injection. For example, a processing temperature for a resin blend including a first resin composed of an ABS resin and a second resin obtained by polymerizing a methyl methacrylate-based monomer may be 210 to 240 °C.

The difference in glass transition temperature between the first resin and the second resin may be 10°C or more, preferably 30°C or more. When the difference in glass transition temperature the first resin and the second resin is 10°C or more, physical properties or mobility between resins may be highly different. As a result, the layer separation may be easily performed in a melting process such as extrusion or injection. Particularly, when the difference in glass transition temperature the first resin and the second resin is 10°C or more, and the second resin has higher glass transition temperature, compared to the first resin, a surface hardness of a resin article can be improved since the second resin having a high glass transition temperature may constitute a surface layer of a resin article. The upper limit of difference in glass transition temperature is not particularly limited. For example, the difference in glass transition temperature between the first and the second resin is preferably 150°C or lower.

Meanwhile, the first resin mainly determines the physical properties of a desired resin article and may be selected according to a kind of the desired resin article and process conditions. As the first resin, a synthetic resin may be used without limitation, but may include a styrene-based resin such as an acrylonitrile butadiene styrene (ABS)-based resin, a polystyrene-based resin, an acrylonitrile styrene acrylate (ASA)-based resin or a styrene-butadiene-styrene block copolymer-based resin; a polyolefin-based resin such as a high density polyethylene-based resin, a low density polyethylene-based resin or a polypropylene-based resin; a thermoplastic elastomer such as an ester-based thermoplastic elastomer or olefin-based thermoplastic elastomer; a polyoxyalkylene-based resin such as a polyoxymethylene-based resin or a polyoxyethylene-based resin; a polyester-based resin such as a polyethylene terephthalate-based resin or a polybutylene terephthalate-based resin; a polyvinylchloride-based resin; a polyphenylenesulfide-based resin; a vinyl alcohol-based resin; a polyamide-based resin; an acrylate-based resin; or a copolymer or mixture thereof.

The second resin shows a difference in physical properties from the first resin as described above, and may provide certain functions, for example, improved mechanical characteristics and excellent surface hardness, to a surface of the desired resin article. Specifically, the second resin may comprise a resin to which a crosslikable organic functional group having a volume larger than a predetermined volume is introduced, and the organic functional group can reduce a melt viscosity of the resin. Accordingly, the second resin in a mixture of melting state may more easily move to contact with the ambient air and the layer separation may be easily performed in a melting process such as extrusion or injection. Also, the second resin has a high glass transition temperature by introducing the organic functional group during the extrusion or injection. As a result, surface hardness of a final article can be additionally improved.

As an example of the organic functional group, an organic functional group containing one oxygen atom or more may be included. Specific example of the organic functional group may be an organic functional group represented by the following Chemical Formula 1.

[Chemical Formula 1] **-R₁-Cy₁**

In chemical formula 1, R₁ is a single bond or an alkylene group having 1 to 16 carbon atoms, Cy₁ is oxacycloalkyl group having 2 to 40 carbon atoms.

Preferably, R₁ is a single bond or an alkylene group having 1 to 8 carbon atoms, more preferably, R₁ is a single bond or an alkylene group having 1 to 4 carbon atoms.

In addition Cy₁ may be oxacycloalkyl group having 2 to 20 carbon atoms or oxacycloalkyl group having 2 to 10 carbon atoms.

As a specific example of the organic functional group of chemical formula 1, glycidyl group, 2-ethyl-oxacyclobutyl group or tetra-hydrofurfuryl group may be included.

A kind of the resin which can be included in the second resin is not particularly limited. For example, a (meth)acrylate-based resin, an epoxy-based resin, an oxetane-based resin, an isocyanate-based resin, a silicon-based resin, a fluorine-based resin and a copolymer thereof are preferably used.

The (meth)acrylate-based resin is a resin formed by polymerizing an acryl or methacryl monomer as a main component, which may include, but is not limited to, alkyl methacrylates such as methyl methacrylate, ethyl methacrylate, propyl methacrylate, butyl methacrylate, cyclohexyl methacrylate, octyl methacrylate, lauryl methacrylate or stearyl methacrylate; alkyl acrylates such as methyl acrylate; ethyl acrylate, propyl acrylate, butyl acrylate, octyl acrylate, lauryl acrylate or stearyl acrylate; or glycidyl (meth)acrylates such as glycidyl methacrylate or glycidyl acrylate.

The epoxy-based resin is a resin containing an epoxy group, and may be, but is not limited to, a bisphenol type such as bisphenol A, bisphenol F, bisphenol S or a hydro additive thereof; a novolac type such as phenol novolac or cresol novolac; a nitrogen-containing ring type such as triglycidyl isocyanurate or hydantoin; an alicyclic type; an aliphatic type; an aromatic type such as naphthalene or biphenyl; a glycidyl type such as glycidyl ether, glycidyl amine or glycidyl ester; a dicyclo type such as dicyclopentadiene; an ester type; or an ether ester type.

The oxetane-based resin is a resin formed by polymerizing an oxetane monomer having at least one oxetane ring, and may be, but is not limited to, 1,4-bis[(3-ethyl-3-oxetanylmethoxy)methyl]benzene, di[1-ethyl(3-oxetanyl)]methylether, or a polyoxetane compound such as phenol novolac oxetane, terephthalate bisoxetane or biphenylene bisoxetane.

The isocyanate-based resin is a resin containing an isocyanate group, and may be, but is not limited to, diphenylmethane diisocyanate (MDI), toluene diisocyanate (TDI) or isophorone diisocyanate (IPDI).

The silicon-based resin is a resin containing a main chain connected by a siloxane bond which is a silicon-oxygen bond, and may be, but is not limited to, polydimethylsiloxane (PDMS).

The fluorine-based resin is resin containing a fluorine atom, and may include, but is not limited to, polytetrafluoroethylene (PTFE), polychlorotrifluoroethylene (PCTFE), polyvinylidene fluoride (PVDF), or polyvinyl fluoride (PVF).

The resin blend for a melting process may include the second resin in an amount of 0.1 to 50 parts by weight, and preferably 1 to 20 parts by weight, relative to 100 parts by weight of the first resin.

When the second resin is included in an amount smaller than 0.1 parts by weight relative to 100 parts by weight of the first resin, the layer separation does not occur. When the second resin is included in an amount larger than 50 parts by weight, the manufacturing cost of the resin article is increased due to the high cost of the second resin.

The resin blend for a melting process may be prepared into a pellet. The pellet prepared using the resin blend may have a structure in which a first resin may be disposed in the middle thereof, and a second resin may be layer-separated from the first resin and disposed to surround the first resin and to form a shell of the pellet.

According to one exemplary embodiment of the present invention, a pellet which comprises a core including a first resin; and a shell including a second resin including a resin to which an organic functional group containing one oxygen atom or more is introduced may be provided. Also, the second resin has a difference in melt viscosity from the first resin of 0.1 to 1000 pa*s at a shear rate of 100 to 1000 s⁻¹ and a processing temperature of the pellet.

In addition, as described above, the difference in glass transition temperature between the first resin and the second resin may be 10°C or more, preferably 30°C or more.

The kind and the physical properties of the first and second resins have already been described in detail, and thus further detailed description will be omitted.

Meanwhile, according to another exemplary embodiment of the present invention, a method of preparing a resin article including melting the resin blend for a melting process to form a melt blend; and processing the melt blend is provided.

As described above, since the second resin has a lower melt viscosity, compared to the first resin, the layer separation may occur during the extrusion or injection of the resin blend, and due to the layer separation, a surface of a pellet or resin article may be selectively coated without an additional process.

Particularly, the second resin may have a lower melt viscosity or higher glass transition temperature due to introduction of a certain organic functional group. Therefore, the second resin in a mixture of melting state may more easily move to contact with the ambient air and the layer separation may be easily performed in a melting process such as extrusion or injection. Also, since the second resin which has relatively higher glass transition temperature may be disposed on a surface of a resin article, a resin article having improved mechanical and surface characteristics can be provided.

Furthermore, the melting process may be performed under a shear stress, and may include, but is not limited to, injection and extrusion.

The resin blend for a melting process may be prepared into a pellet by extrusion. In addition, the resin blend may be prepared into a pellet by extrusion, and then processed into a resin article through a melting process such as injection. Alternatively, the resin blend may be directly prepared into a resin article by injection.

According to the kinds of the first and second resins used in the extrusion or injection of the resin blend, a temperature to be applied may be changed.

The method of preparing a resin article may further include curing a resulting product obtained by melting-processing the resin blend, that is, a melting-processed product obtained from the resin blend.

Meanwhile, the method of preparing a resin article may further include preparing a second resin before the melting-processing of the resin blend for a melting process. As examples for the preparation of the second resin, there is bulk polymerization, solution polymerization, suspension polymerization, or emulsion polymerization.

In the suspension polymerization method, the second resin may be prepared by dispersing a resin in a reaction medium, adding and blending an additive such as a chain transfer agent, an initiator and a dispersion stabilizer in the reaction solvent and polymerizing the blend at 40°C or higher. The resin is a resin to which an organic functional group containing one oxygen atom or more is introduced.

The reaction medium may be any medium known to be conventionally used to prepare a synthetic resin, polymer or copolymer without limitation. An example of the reaction medium may be methyl isobutyl ketone or distilled water.

The chain transfer agent which can be added to the reaction solvent may be, but is not limited to, an alkyl mercaptan such as n-butyl mercaptan, n-dodecyl mercaptan, tertiary dodecyl mercaptan or isopropyl mercaptan; aryl mercaptan; a halogen compound such as carbon tetrachloride; or an aromatic compound such as an alpha-methylstyrene dimer or an alpha-ethylstyrene dimer.

The initiator is a polymerization initiator, which may be, but is not limited to, a peroxide such as octanoyl peroxide, decanoyl peroxide or lauryl peroxide, or an azo-based compound such as azobisisobutyronitrile or azobis-(2,4-dimethyl)-valeronitrile.

The dispersion stabilizer which can be included in the reaction medium may be, but is not limited to, an organic distribution agent such as polyvinyl alcohol, polyolefin-maleic acid or cellulose or an inorganic distribution agent such as tricalcium phosphate.

The first and second resins have already been described above in detail, and thus further description thereof will be omitted.

Meanwhile, according to another exemplary embodiment of the present invention, a melting-processed resin article which includes a first resin layer; a second resin layer formed on the first resin layer; and an interface layer formed between the first resin layer and the second resin layer is provided. Here, the interface layer includes a first resin and a second resin. Also, the second resin layer includes a resin to which an organic functional group containing one oxygen atom or more is introduced.

The resin article prepared from the resin blend including specific first and second resins may include a layer-separated structure in which a first resin layer is disposed inside and a second resin layer is formed on a periphery thereof.

Due to difference of melt viscosities or glass transition temperatures, the layer separation between the first and second resin may be easily performed in a melting process such as extrusion or injection, and the second resin may be easily positioned adjacent to the ambient air. Accordingly, the resin article in which a first resin layer is disposed inside and a second resin layer is formed on a periphery thereof can be provided. Since the resin article can have improved mechanical and surface characteristics, a coating or painting process to improve surface characteristics may be omitted, production time and a production cost may be reduced, and productivity of a final product may be increased.

The resin article has a novel structure which has not been known in the art. The resin article is formed in such a structure that the first resin layer is separated from the second resin layer by an interface layer and the second resin layer is exposed to the ambient air. This structure may not be formed by extrusion and injection process of a general resin, and thus it is difficult to realize the effects according to the structure.

Particularly, since the second resin may include the resin to which the specific organic functional group is introduced as mentioned above, the second resin may have a low melt viscosity. As a result, the second resin in a mixture of melting state may more easily move to contact with the ambient air and the layer separation may be easily performed in a melting process such as extrusion or injection. Also, due to introduction of a specific organic functional group, the surface hardness of the resin article can be additionally improved.

The first resin layer may indicate a part substantially including the first resin and disposed inside of the resin article. The second resin layer may indicate a part substantially including the second resin and disposed on the surface of the resin article and thus providing a certain function to the surface of the resin article.

The first and second resins and the resin to which a certain organic functional group is introduced included in the second resin have already been described above in detail, and thus further description thereof will be omitted.

Meanwhile, the resin article may include an interface layer including a blend of a first resin and a second resin and formed between the first resin layer and the second resin layer. The interface layer may serve as a boundary formed between the layer-separated first and second resin layers, and include the blend of the first and second resins. The blend may be present in such a manner that the first resin is physically or chemically bound to the second resin, and the first resin layer may be bound to the second resin layer by the blend.

As described above, the resin article may have such a structure that the first resin layer is separated from the second resin layer by the interface layer, and the second resin layer is exposed to the ambient air. For example, the resin article may have a structure in which the first resin layer, an interface layer and a second resin layer are sequentially stacked, or a structure in which the first resin layer is disposed, and the interface layers and the second resin layer are disposed above and below the first resin layer. Alternatively, the resin article may have such a structure that the first resin layer formed in various three-dimensional shapes, for example, spherical, circular, polyhedral and sheet-type shapes, is sequentially surrounded by the interface and the second resin layer.

The layer separation of the resin article may be caused by a difference in physical properties between first and second resins. Here, the different physical properties may, for example, be melt viscosity. Further detailed description of the difference in physical properties is the same as described above.

Meanwhile, the first resin layer, the second resin layer and the interface layer may be observed using a scanning electron microscope (SEM) after a sample goes through a low temperature impact test and a cross-section of the sample is etched using a THF vapor. To observe the first and second resin layers and the interface layer and measure a thickness of each layer, a sample was cut with a diamond knife using a microtoming device to obtain a smooth cross-section, and the smooth cross-section was etched using a solution capable of more selectively dissolving a second resin than a first resin. The etched cross-section is dissolved to different levels of depth according to contents of the first and second resins, and when the cross-section is viewed at a 45-degree angle from a surface thereof through SEM, the first resin layer, the second resin layer and the interface layer may be observed due to a shade difference and thicknesses thereof may be measured. In the present invention, as the solution more selectively dissolving the second resin, a 1,2-dichloroethane solution (10 volume%, in EtOH) is used, but is merely an example. Therefore, any solution having a higher solubility of the second resin than the first resin may be used without limitation and the solution may vary according to the kind and composition of the second resin.

The thickness of the interface layer may be 0.01 to 95%, and preferably 0.1 to 70%, of the total thickness of the second resin layer and the interface layer. When the thickness of the interface layer is 0.01 to 95% to the total thickness of the second resin layer and the interface layer, the interface adhesive strength of the first and second resin layers is excellent. Thus, the first and the second resin layers are not detached, and the surface characteristic caused by the second resin layer may be considerably improved. On the other hand, when the thickness of the interface layer is too smaller than the total thickness of the second resin layer and the interface layer, the adhesive strength between the first and second resin layers is decreased, and thus both layers may be detached. However, when the thickness of the interface layer is very high, the improvement in a surface characteristic of the second resin layer may be insignificant.

The second resin layer may have a thickness of 0.01 to 60% and preferably 1 to 40%, of the total thickness of the resin article. As the second resin layer has a thickness in a predetermined range, predetermined functions may be provided to the surface of the resin article. Here, when the second resin layer has a very low thickness, it may be difficult to sufficiently improve the surface characteristic of the resin article, and when the second resin layer has a very high thickness, the mechanical property of the second resin may be reflected to the resin article, and thus the mechanical property of the first resin may be changed.

The first and second resins, the difference in physical properties between the first and second resins and the resin to which a certain organic functional group is introduced included in the second resin have already been described above in detail, and thus further description thereof will be omitted.

Meanwhile, according to another exemplary embodiment of the present invention, a melting-processed resin article which includes a first resin layer and a second resin layer formed on the first resin layer may be provided. Here, components of the first resin layer are detected from a surface of the second resin layer by an infrared (IR) spectrometer, and the second resin layer includes a resin to which an organic functional group containing one or more oxygen atoms is introduced.

A structure of the resin article, that is, a structure in which the component of the first resin layer is detected from the surface of the second resin layer by the IR spectrometer, is novel, and has not been known in the art. Generally, in a coating process, the component of the first resin layer is difficult to detect from the surface of the second resin layer.

The surface of the second resin layer indicates a surface exposed to the ambient air, not to the first resin layer.

In addition, the difference in physical properties may indicate a difference in physical properties between a first and second resin or a difference in physical properties between a first and second resin layers.

According to another exemplary embodiment of the present invention, a part of an automobile, a helmet, a part of an electric device, a part of a spinning machine, a toy, or a pipe including the melting-processed resin article may be provided.

The present invention will be described with reference to the following Examples in detail. However, the present invention is not limited to the following Examples.

### Experimental Example 1: Measurement of Glass Transition Temperature

Glass transition temperatures of the first resins and the second resins obtained from Examples and Comparative Examples were measured using a differential scanning calorimeter (DSC823e, Mettler-toledo). More specifically, after an aluminum pan into which 1 mg of the first resin or the second resin was added was equipped inside of a measuring instrument, a glass transition temperature was measured at -50 °C to 300 °C (10 °C/min, 2 cycles).

Glass transition temperature of a first resin used in the present invention was 70 °C. Glass transition temperatures of the second resin obtained from Examples and Comparative Examples were measured individually, and the difference in glass transition temperature between the first and second resins was measured.

### Experimental Example 2: Measurement of Melt Viscosity

Melt viscosities of the first resins, the second resins and samples obtained from Examples and Comparative Examples were measured using a capillary rheometer 1501 (Gottfert).

More specifically, after a capillary die was attached to a barrel, the first resin, the second resin or the sample was put into the barrel by dividing to 3 parts. A shear viscosity (pa*s) according to a shear rate of 100 to 1000 s⁻¹ was measured at a processing temperature of 240 °C.

### Experimental Example 3: Observation of Feature of Cross-section

The samples prepared in Examples and Comparative Examples went through a low temperature impact test. Then, fracture surfaces of the samples were etched using THF vapor, and a layer-separated cross-section was observed using an SEM.

Meanwhile, to measure thicknesses of layer-separated first and second resin layers and an interface layer, the samples of the following Examples and Comparative Examples were cut with a diamond knife at -120 °C using a microtoming device (Leica EM FC6), thereby obtaining a smooth cross-section. The part of the sample with the microtomed smooth cross-section was dipped in a 1,2-dichloroethane solution (10 volume%, in EtOH) to etch for 10 seconds, and then washed with distilled water. The etched cross-sectional part was dissolved to different levels of depth according to the contents of the first and second resins, and could be observed using an SEM. That is, when the cross-section was viewed at a 45-degree angle from a surface, due to a shade difference, the first resin layer, the second resin layer and the interface layer could be observed, and a thickness of each layer could be measured.

### Experimental Example 4: Experiment for Measuring Hardness

According to ASTM D256, a hardness of the samples obtained from Examples and Comparative Examples was measured. Specifically, the sample having a V-type notch was destroyed by a weight of a pendulum, and energy which was needed to destroy the sample was measured using an impact testing machine (Impact 104, Tinius Olsen). The samples of 0,32 cm (1/8") and 0,63 cm (1/4") were measured 5 times and the average values of the results were obtained.

### Experimental Example 5: Experiment for Measuring Pencil Hardness

Pencil hardnesses of the samples in Examples and Comparative Examples were measured under a constant load of 500 g using a pencil hardness tester (Chungbuk Tech). Scratches were made on a surface of the samples by standard pencils (Mitsubishi; grade 6B to 9H) with a fixed angle of 45 degrees, and therefore a change rate of the surface was observed (ASTM 3363). The values of pencil hardness are average values of the results obtained from tests performed 5 times.

### Experimental Example 6: Surface Analysis by IR Spectrometer

The experiment was performed using a UMA-600 IR microscope equipped with a Varian FTS-7000 spectrometer (Varian, USA) and a mercury cadmium telluride (MCT) detector, and detection of spectra and data processing were performed using Win-IR PRO 3.4 software (Varian, USA). Conditions of the experiment were as follows:
- Germanium (Ge) ATR crystal having refractive index of 4.0
- Spectral Resolution of Middle Infrared Spectrum obtained by Attenuated Total Reflection: 8 cm⁻¹ and Range of 16 Scans: 4000 cm⁻¹ - 600 cm⁻¹.
- Internal Reference Band: Carbonyl Group (C=O str., ∼1725 cm⁻¹) of Acrylate
- Original Component of First Resin: Butadiene Compound [C=C str. (∼1630 cm⁻¹) or =C-H out-of-plane vib. (∼970 cm⁻¹)]

Peak intensity ratios [I_{BD}(C=C)/I_{A}(C=O)] and [I_{BD}(out-of-plane)/I_{A}(C=O)] were calculated, and the detection of spectra was performed 5 times in different regions of one sample, and an average value and a standard deviation were calculated.

### Example 1

### (1) Preparation of Second Resin

1500 g of distilled water and 4 g of 2% polyvinylalcohol aqueous solution as a dispersing agent were put into a 3-liter reactor and dissolved. Subsequently, 560 g of methyl methacrylate, 240 g of glycidyl methacrylate, 2.4 g of n-dodecyl mercaptan as a chain transfer agent and 2.4 g of azobisisobutyronitrile as an initiator were further added thereto, and mixed while stirring at 400 rpm. The mixture was polymerized by 3-hour reaction at 60 °C, and cooled to 30 °C, thereby obtaining a bead-type second resin. Afterward, the second resin was washed three times with distilled water, dehydrated and dried in an oven.

### (2) Preparation of Resin Blend and Resin Article Using the Same

After 93 parts by weight of a first resin (a thermoplastic resin composed of 60 wt% methyl methacrylate, 7 wt% acrylonitrile, 10 wt% butadiene and 23 wt% styrene) were blended with 7 parts by weight of the second resin, the blend was extruded using a twin-screw extruder (Leistritz) at 240 °C, thereby obtaining a pellet. Then, the pellet was injected using an EC100Φ30 injector (ENGEL) at 240 °C, thereby obtaining a sample having a thickness of 3200 µm.

### (3) Measurement of Physical Properties of Sample

As the results of measurement of the physical properties of the obtained sample, it was shown that a thickness of the second resin layer was 82 µm, a thickness of an interface layer was 33 µm, a difference in melt viscosity was 180 pa*s, a glass transition temperature (Tg) of the second resin was 180 °C, a hardness in the case of IZOD 0,32 cm (1/8") was 3.2 kg·cm/cm, a hardness in the case of IZOD 0,63 cm (1/4") was 5.1 kg·cm/cm, a pencil hardness was 2H, and layer separation occurred. The peak intensity ratio [I_{BD}(C=C)/I_{A}(C=O)] measured by an IR spectrometer had an average of 0.0124 with a standard deviation of 0.0006, and the peak intensity ratio [I_{BD}(out-of-plane)/I_{A}(C=O)] had an average of 0.411 with a standard deviation of 0.0022.

### Example 2

A sample having a thickness of 3200 µm was obtained by the same method as described in Example 1, except that 560 g of methyl methacrylate and 240 g of 3-ethyl-3-methacryloxymethyloxethane (EMO) were used instead of 560 g of methyl methacrylate and 240 g of glycidyl methacrylate.

As the results of measurement of the physical properties of the obtained sample, it was shown that a thickness of the second resin layer was 80 µm, a thickness of an interface layer was 30 µm, a difference in melt viscosity was 280 pa*s, a glass transition temperature (Tg) of the second resin was 101 °C, a hardness in the case of IZOD 0,32 cm (1/8") was 8.5 kg·cm/cm, a hardness in the case of IZOD 0,63 cm (1/4") was 8.9 kg·cm/cm, a pencil hardness was 2H, and layer separation occurred.

### Example 3

A sample having a thickness of 3200 µm was obtained by the same method as described in Example 1, except that 400 g of methyl methacrylate and 400 g of 3-ethyl-3-methacryloxymethyloxethane (EMO) were used instead of 560 g of methyl methacrylate and 240 g of glycidyl methacrylate.

As the results of measurement of the physical properties of the obtained sample, it was shown that a thickness of the second resin layer was 83 µm, a thickness of an interface layer was 26 µm, a difference in melt viscosity was 370 pa*s, a glass transition temperature (Tg) of the second resin was 102 °C, a hardness in the case of IZOD 0,32 cm (1/8") was 7.7 kg·cm/cm, a hardness in the case of IZOD 0,63 cm (1/4") was 6.8 kg·cm/cm, a pencil hardness was 2.5H, and layer separation occurred.

### Example 4

A sample having a thickness of 3200 µm was obtained by the same method as described in Example 1, except that 240 g of methyl methacrylate and 560 g of 3-ethyl-3-methacryloxymethyloxethane (EMO) were used instead of 560 g of methyl methacrylate and 240 g of glycidyl methacrylate.

As the results of measurement of the physical properties of the obtained sample, it was shown that a thickness of the second resin layer was 89 µm, a thickness of an interface layer was 24 µm, a difference in melt viscosity was 490 pa*s, a glass transition temperature (Tg) of the second resin was 105 °C, a hardness in the case of IZOD 0,32 cm (1/8") was 3.9 kg·cm/cm, a hardness in the case of IZOD 0,63 cm (1/4") was 4.3 kg·cm/cm, a pencil hardness was 3H, and layer separation occurred.

### Example 5

### (1) Preparation of Second Resin

A second resin was obtained by the same method as described in Example 2.

### (2) Preparation of Resin Blend and Resin Article Using the Same

A sample having a thickness of 3200 µm was obtained by the same method as described in Example 1, except that 21 parts by weight of the second resin were blended with 79 parts by weight of the first resin.

### (3) Measurement of Physical Properties of Sample

As the results of measurement of the physical properties of the obtained sample, it was shown that a thickness of the second resin layer was 96 µm, a thickness of an interface layer was 52 µm, a difference in melt viscosity was 280 pa*s, a glass transition temperature (Tg) of the second resin was 101 °C, a hardness in the case of IZOD 0,32 cm (1/8") was 4.2 kg·cm/cm, a hardness in the case of IZOD 0,63 cm (1/4") was 3.9 kg·cm/cm, a pencil hardness was 3H, and layer separation occurred.

### Example 6

A sample having a thickness of 3200 µm was obtained by the same method as described in Example 1, except that 560 g of methyl methacrylate, 240 g of 3-ethyl-3-methacryloxymethyloxethane, 1.6 g of n-dodecyl mercaptan as a chain transfer agent and 2.4 g of azobisisobutyronitrile (AIBN) as an initiator were put into a 3-liter reactor.

As the results of measurement of the physical properties of the obtained sample, it was shown that a thickness of the second resin layer was 84 µm, a thickness of an interface layer was 33 µm, a difference in melt viscosity was 470 pa*s, a glass transition temperature (Tg) of the second resin was 100 °C, a hardness in the case of IZOD 0,32 cm (1/8") was 5.3 kg·cm/cm, a hardness in the case of IZOD 0,63 cm (1/4") was 5.8 kg·cm/cm, a pencil hardness was 2.5H, and layer separation occurred.

### Comparative Example 1

After 100 parts by weight of a pellet of a first resin (a thermoplastic resin composed of 60 wt% methyl methacrylate, 7 wt% acrylonitrile, 10 wt% butadiene and 23 wt% styrene) were dried in an oven, the pellet was injected using an EC100Φ30 injector (ENGEL) at 240 °C, thereby obtaining a sample having a thickness of 3200 µm.

As the results obtained by measuring physical properties of the sample, a glass transition temperature (Tg) was 70 °C, a hardness in the case of IZOD 0,32 cm (1/8") was 9.9 kg·cm/cm, a hardness in the case of IZOD 0,63 cm (1/4") was 10.0 kg·cm/cm, a pencil hardness was F.

### Comparative Example 2

A sample having a thickness of 3200 µm was obtained by the same method as described in Example 1, except that 560 g of methyl methacrylate, 240 g of 3-ethyl-3-methacryloxymethyloxethane, 1.6 g of n-dodecyl mercaptan as a chain transfer agent and 0.8 g of azobisisobutyronitrile (AIBN) as an initiator were put into a 3-liter reactor.

As the results of measurement of the physical properties of the obtained sample, it was shown that a thickness of the second resin layer was 2 µm, a thickness of an interface layer was not measured, a difference in melt viscosity was 1090 pa*s, a glass transition temperature (Tg) of the second resin was 102 °C, a hardness in the case of IZOD 0,32 cm (1/8") was 8.7 kg·cm/cm, a hardness in the case of IZOD 0,63 cm (1/8") was 9.2 kg·cm/cm, a pencil hardness was H, and layer separation almost did not occur.

### Comparative Example 3

A sample having a thickness of 3200 µm was obtained by the same method as described in Example 1, except that 560 g of methyl methacrylate and 240 g of nomal hexyl methacrylate were used instead of 560 g of methyl methacrylate and 240 g of glycidyl methacrylate.

As the results of measurement of the physical properties of the obtained sample, it was shown that a thickness of the second resin layer was 81 µm, a thickness of an interface layer was 17 µm, a difference in melt viscosity was 460 pa*s, a glass transition temperature (Tg) of the second resin was 62 °C, a hardness in the case of IZOD 0,32 cm (1/8") was 9.5 kg·cm/cm, a hardness in the case of IZOD 0,63 cm (1/4") was 9.3 kg·cm/cm, a pencil hardness was HB, and layer separation occurred.

### Comparative Example 4

After 100 parts by weight of a pellet of a first resin (a thermoplastic resin composed of 60 wt% methyl methacrylate, 7 wt% acrylonitrile, 10 wt% butadiene and 23 wt% styrene) were dried in an oven, the pellet was injected using an EC100Φ30 injector (ENGEL) at 240 °C, thereby obtaining a sample.

A hard coating layer was formed on the sample by forming a layer by coating an anti-contamination hard coating solution (including multi-functional polyacrylate) prepared by the inventor (17.5 wt% DPHA, 10 wt% PETA, 1.5 wt% perfluorohexylethyl methacrylate, 5 wt% urethane acrylate EB 1290 from SK cytech, 45 wt% methyl ethyl ketone, 20 wt% isopropyl alcohol and 1 wt% IRGACURE 184 as a UV initiator from Ciba) using a Mayer bar #9, drying the coating at 60 to 90 °C for 4 minutes to form a coating film, and curing the coating film by UV irradiation with an intensity of 3000 mJ/cm².

A pencil hardness of the hard coating layer was 3H, average values and standard variations of peak intensity ratios [I_{BD}(C=C) / I_{A}(C=O)] and [I_{BD}(out-of-plane) / I_{A}(C=O)] detected by an IR spectrometer were 0, respectively.

As described above, when the resin blend of Examples was used the layer separation between the resins in extrusion and injection was observed. Due to the layer separation, the resin having high hardness was disposed on a surface of the resin article. As a result, it was confirmed that the resin articles had an improved surface hardness without using an additional coating or plating process.

On the other hand, the resin article obtained in Comparative Examples had a low surface hardness relatively, and the resin article for a part of an automobile or a part of an electric device, a coating or plating process was needed to improve a surface characteristic.

According to the present invention, a resin blend for a melting process, a pellet, a method of preparing a resin article using the same can be provided. The resin blend can improve mechanical and surface characteristics of a resin article. Further, since additional coating is not required for manufacturing a resin article, a manufacturing time and/or cost can be reduced, and productivity can be increased.

## Claims

1. A resin blend for a melting process under shear stress, comprising:
a first resin; and
a second resin that comprises a resin to which an organic functional group containing one or more oxygen atoms is introduced, and that has a difference in melt viscosity from the first resin of 1 to 1000 pa*s at a shear rate of 100 to 1000 s⁻¹ and a processing temperature of the resin blend,
wherein the first resin comprises at least one selected from the group consisting of a styrene-based resin, a polyolefn-based resin, a thermoplastic elastomer, a polyoxyalkylene-based resin, a polyester-based resin, a polyvinyl chloride-based resin, , a polyphenylene sulfide-based resin, a vinyl alcohol-based resin, an acrylate-based resin and a copolymer thereof,
wherein the resin comprised in the second resin comprises at least one selected from the group consisting of a (meth)acrylate-based resin, an epoxy-based resin, an oxetane-based resin, an isocyanate-based resin, a silicon-based resin, a fluorine-based resin and a copolymer thereof, and
wherein the organic functional group containing one or more oxygen atoms comprises an organic functional group represented by the following Chemical Formula 1:
[Chemical Formula 1] **-R₁-Cy₁**
wherein R₁ is a single bond or an alkylene group having 1 to 16 carbon atoms, Cy₁ is oxacycloalkyl group having 2 to 40 carbon atoms.

2. The resin blend according to claim 1, wherein the second resin has a difference in glass transition temperature from the first resin of 10°C to 150°C.

3. The resin blend according to claim 1, wherein the second resin has a difference in glass transition temperature from the first resin of 30°C to 150°C.

4. A pellet, comprising:
a core including a first resin; and
a shell including a second resin that comprises a resin to which an organic functional group containing one or more oxygen atoms is introduced, and that has a difference in melt viscosity from the first resin of 1 to 1000 pa*s at a shear rate of 100 to 1000 s⁻¹ and a processing temperature of the pellet,
wherein the first resin comprises at least one selected from the group consisting of a styrene-based resin, a polyolefin-based resin, a thermoplastic elastomer, a polyoxyalkylene-based resin, a polyester-based resin, a polyvinyl chloride-based resin, a polyphenylene sulfide-based resin, a vinyl alcohol-based resin, an acrylate-based resin and a copolymer thereof,
wherein the resin comprised in the second resin comprises at least one selected from the group consisting of a (meth)acrylate-based resin, an epoxy-based resin, an oxetane-based resin, an isocyanate-based resin, a silicon-based resin, a fluorine-based resin and a copolymer thereon, and
wherein the organic functional group containing one or more oxygen atoms comprises an organic functional group represented by the following Chemical Formula 1:
[Chemical Formula 1] **-R₁-Cy₁**
wherein R₁ is a single bond or an alkylene group having 1 to 16 carbon atoms, Cy₁ is oxacycloalkyl group having 2 to 40 carbon atoms.

5. The pellet according to claim 4, wherein the second resin has a difference in glass transition temperature from the first resin of 10°C to 150°C.

6. A method of preparing a resin article, comprising:
melting the resin blend of claim 1 to form a melt blend; and
processing the melt blend.

7. The method according to claim 6, further comprising:
curing a melting-processed product obtained from the resin blend.

8. A method of preparing a resin article, comprising:
melting the pellet of claim 4 to form a melt; and
processing the melt.

## Patentansprüche

1. Harzgemisch für ein Schmelzverfahren unter Scherspannung, welches umfasst:
ein erstes Harz;
ein zweites Harz, das ein Harz umfasst, an das eine organische funktionelle Gruppe enthaltend ein oder mehrere Sauerstoffatome eingeführt ist, und das einen Unterschied in der Schmelzviskosität gegenüber dem ersten Harz von 1 bis 1000 pa*s bei einer Scherrate von 100 bis 1000 s⁻¹ und einer Verarbeitungstemperatur des Harzgemisches aufweist,
wobei das erste Harz wenigstens eines umfasst, das ausgewählt ist aus der Gruppe bestehend aus einem Harz auf Styrolbasis, einem Harz auf Polyolefinbasis, einem thermoplastischen Elastomer, einem Harz auf Polyoxyalkylenbasis, einem Harz auf Polyesterbasis, einem Harz auf Polyvinylchloridbasis, einem Harz auf Polyphenylensulfidbasis, einem Harz auf Vinylalkoholbasis, einem Harz auf Acrylatbasis und einem Copolymer derselben,
wobei das Harz, das in dem zweiten Harz umfasst ist, wenigstens eines umfasst, das ausgewählt ist aus der Gruppe bestehend aus einem Harz auf (Meth)acrylatbasis,
einem Harz auf Epoxybasis, einem Harz auf Oxetanbasis, einem Harz auf Isocyanatbasis, einem Harz auf Siliciumbasis, einem Harz auf Fluorbasis und einem Copolymer derselben, und
wobei die organische funktionelle Gruppe, die ein oder mehrere Sauerstoffatome enthält, eine organische funktionelle Gruppe umfasst, die durch die folgende chemische Formel 1 dargestellt ist:
[Chemische Formel 1] **-R₁-Cy₁**
wobei R₁ eine Einfachbindung oder eine Alkylengruppe mit 1 bis 16 Kohlenstoffatomen und Cy₁ Oxacycloalkylgruppe mit 2 bis 40 Kohlenstoffatomen ist.

2. Harzgemisch nach Anspruch 1, wobei das zweite Harz einen Unterschied bezüglich der Glasübergangstemperatur gegenüber dem ersten Harz von 10°C bis 150°C aufweist.

3. Harzgemisch nach Anspruch 1, wobei das zweite Harz einen Unterschied bezüglich der Glasübergangstemperatur gegenüber dem ersten Harz von 30°C bis 150°C aufweist.

4. Pellet, welches umfasst:
einen Kern einschließend ein erstes Harz;
einen Mantel einschließend ein zweites Harz, das ein Harz umfasst, an das eine organische funktionelle Gruppe, die ein oder mehrere Sauerstoffatome enthält, eingefügt ist, und das einen Unterschied bezüglich der Schmelzviskosität gegenüber dem ersten Harz von 1 bis 1000 pa*s bei einer Scherrate von 100 bis 1000 s⁻¹ und einer Verarbeitungstemperatur des Pellets aufweist,
wobei das erste Harz wenigstens eines umfasst, das ausgewählt ist aus der Gruppe bestehend aus einem Harz auf Styrolbasis, einem Harz auf Polyolefinbasis, einem thermoplastischen Elastomer, einem Harz auf Polyoxyalkylenbasis, einem Harz auf Polyesterbasis, einem Harz auf Polyvinylchloridbasis, einem Harz auf Polyphenylensulfidbasis, einem Harz auf Vinylalkoholbasis, einem Harz auf Acrylatbasis und einem Copolymer derselben,
wobei das Harz, das in dem zweiten Harz umfasst ist, wenigstens eines umfasst, das ausgewählt ist aus der Gruppe bestehend aus einem Harz auf (Meth)acrylatbasis, einem Harz auf Epoxybasis, einem Harz auf Oxetanbasis, einem Harz auf Isocyanatbasis, einem Harz auf Siliciumbasis, einem Harz auf Fluorbasis und einem Copolymer derselben und
wobei die organische funktionelle Gruppe, die ein oder mehrere Sauerstoffatome enthält, eine organische funktionelle Gruppe umfasst, die durch die folgende chemische Formel 1 dargestellt ist:
[Chemische Formel 1] **-R₁-Cy₁**
wobei R₁ eine Einfachbindung oder eine Alkylengruppe mit 1 bis 16 Kohlenstoffatomen ist und Cy₁ Oxacycloalkylgruppe mit 2 bis 40 Kohlenstoffatomen ist.

5. Pellet nach Anspruch 4, wobei das zweite Harz einen Unterschied bezüglich der Glasübergangstemperatur gegenüber dem ersten Harz von 10°C bis 150°C aufweist.

6. Verfahren zum Herstellen eines Harzgegenstands, welches umfasst:
Schmelzen des Harzgemisches nach Anspruch 1, um ein Schmelzgemisch zu bilden;
Verarbeiten des Schmelzgemisches.

7. Verfahren nach Anspruch 6, weiter umfassend:
Härten eines schmelzverarbeiteten Produkts, das aus dem Schmelzgemisch erhalten wird.

8. Verfahren zum Herstellen eines Harzgegenstands, welches umfasst:
Schmelzen des Pellets nach Anspruch 4, um eine Schmelze zu bilden; und
Verarbeiten der Schmelze.

## Revendications

1. Mélange de résine destiné à un procédé de fusion sous contrainte de cisaillage, comprenant :
une première résine ; et
une deuxième résine qui comprend une résine à laquelle un groupe fonctionnel organique contenant un ou plusieurs atomes oxygène a été introduit, et qui a une différence de viscosité à l'état fondu de la première résine de 1 à 1000 pa*s à un taux de cisaillement de 100 à 1000 s⁻¹ et une température de traitement du mélange de résine,
dans lequel la première résine comprend au moins un élément sélectionné parmi le groupe constitué d'une résine à base de styrène, d'une résine à base de polyoléfine, d'un élastomère thermoplastique, d'une résine à base de polyoxyalkylène, d'une résine à base de polyester, d'une résine à base de chlorure de polyvinyle, d'une résine à base de sulfure de polyphénylène, d'une résine à base d'alcool vinylique d'une résine à base d'acrylate et un copolymère de ces éléments,
dans lequel la résine constituée de la deuxième résine comprend au moins un élément sélectionné parmi le groupe constitué d'une résine à base de (méth)acrylate, d'une résine à base d'époxy, d'une résine à base d'oxétane, d'une résine à base d'isocyanate, d'une résine à base de silicium, d'une résine à base de fluorine, et un copolymère de ces éléments, et
dans lequel le groupe fonctionnel organique contenant un ou plusieurs atomes oxygène comprend un groupe fonctionnel organique représenté par la formule chimique 1 suivante :
[Formule chimique 1] **-R₁-Cy₁**
dans laquelle R₁ est une liaison unique ou un groupe alkylène ayant 1 à 16 atomes carbone, Cy₁ est un groupe oxacycloalkyle ayant 2 à 40 atomes carbone.

2. Mélange de résine selon la revendication 1, dans lequel la deuxième résine a une différence de température de transition vitreuse de la première résine de 10°C à 150°C.

3. Mélange de résine selon la revendication 1, dans lequel la deuxième résine a une différence de température de transition vitreuse de la première résine de 30°C à 150°C.

4. Un granulé, comprenant :
un noyau incluant une première résine, et
une coque incluant une deuxième résine qui comprend une résine dans laquelle un groupe fonctionnel organique contenant un ou plusieurs atomes oxygène est introduit, et qui a une différence de viscosité à l'état fondu de la première résine de 1 à 1000 pa*s à un taux de cisaillement de 100 à 1000 s⁻¹ et une température de traitement du granulé,
dans lequel la première résine comprend au moins un élément sélectionné parmi le groupe constitué d'une résine à base de styrène, d'une résine à base de polyoléfine, d'un élastomère thermoplastique, d'une résine à base de polyoxyalkylène, d'une résine à base de polyester, d'une résine à base de chlorure de polyvinyle, d'une résine à base de sulfure de polyphénylène, d'une résine à base d'alcool vinylique d'une résine à base d'acrylate et un copolymère de ces éléments,
dans lequel la résine constituée de la deuxième résine comprend au moins un élément sélectionné parmi le groupe constitué d'une résine à base de (méth)acrylate, d'une résine à base d'époxy, d'une résine à base d'oxétane, d'une résine à base d'isocyanate, d'une résine à base de silicium, d'une résine à base de fluorine, et un copolymère de ces éléments, et
dans lequel le groupe fonctionnel organique contenant un ou plusieurs atomes oxygène comprend un groupe fonctionnel organique représenté par la formule chimique 1 suivante :
[Formule chimique 1] **-R₁-Cy₁**
dans laquelle R₁ est une liaison unique ou un groupe alkylène ayant 1 à 16 atomes carbone, Cy₁ est un groupe oxacycloalkyle ayant 2 à 40 atomes carbone.

5. Granulé selon la revendication 4, dans lequel la deuxième résine a une différence de température de transition vitreuse de la première résine de 10°C à 150°C.

6. Procédé pour préparer un article en résine, consistant à :
faire fondre le mélange de résine de la revendication 1 pour former un mélange fondu ; et
traiter le mélange fondu.

7. Procédé selon la revendication 6 consistant en outre à :
faire prendre un produit traité par fusion obtenu à partir du mélange de résine.

8. Procédé pour préparer un article en résine, consistant à :
faire fondre le granulé de la revendication 4 pour former une masse fondue ; et
traiter la masse fondue.
